(19) Europäisches Patentamt
European Patent Office
Office européen des brevets

(11) **EP 2 430 738 B1**

(12) **FASCICULE DE BREVET EUROPEEN**

(45) Date de publication et mention
de la délivrance du brevet:
**04.11.2015 Bulletin 2015/45**

(21) Numéro de dépôt: **10721459.5**

(22) Date de dépôt: **12.05.2010**

(51) Int Cl.:
**H02M 3/157** *(2006.01)*     **G05F 1/67** *(2006.01)*
**H02J 7/35** *(2006.01)*

(86) Numéro de dépôt international:
**PCT/EP2010/056579**

(87) Numéro de publication internationale:
**WO 2010/130798 (18.11.2010 Gazette 2010/46)**

(54) **CIRCUIT CONVERTISSEUR ET SYSTEME ELECTRONIQUE COMPORTANT UN TEL CIRCUIT**

KONVERTERSCHALTUNG UND ELEKTRONISCHES SYSTEM EINSCHLIESSLICH DIESER
SCHALTUNG

CONVERTER CIRCUIT AND ELECTRONIC SYSTEM INCLUDING SUCH CIRCUIT

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **14.05.2009 FR 0902334**

(43) Date de publication de la demande:
**21.03.2012 Bulletin 2012/12**

(73) Titulaire: **Commissariat à l'Énergie Atomique
et aux Énergies Alternatives
75015 Paris (FR)**

(72) Inventeurs:
• **WALTISPERGER, Guy
F-38000 Grenoble (FR)**

• **RAMOND, Adrien
F-82200 Moissac (FR)**
• **ROTHAN, Frédéric
F-38170 Seyssinet-Pariset (FR)**

(74) Mandataire: **Croonenbroek, Thomas Jakob et al
Innovincia
11, avenue des Tilleuls
74200 Thonon-les-Bains (FR)**

(56) Documents cités:
**FR-A1- 2 686 434     US-A1- 2006 174 939
US-A1- 2008 149 167**

EP 2 430 738 B1

**Description**

La présente invention concerne un circuit convertisseur et un système électronique comportant un tel circuit.

Le développement des panneaux photovoltaïques a pris un essor très important ces dernières années afin d'utiliser de plus en plus des sources d'énergie renouvelables permettant de réduire l'effet de serre néfaste provoqué en particulier par l'émission du dioxyde de carbone.

Il en est de même des sources d'énergie renouvelables comme les éoliennes ou des sources thermoélectriques.

Ces sources d'énergie ont la particularité que l'énergie électrique fournie par ces sources varie fortement en fonction des phénomènes naturels qui les alimentent. De plus, un générateur photovoltaïque est un générateur dont la caractéristique $I = f(U)$ est fortement non-linéaire. Ainsi, pour un même éclairement, la puissance délivrée sera différente selon la charge.

Ainsi, le rendement, c'est-à-dire la puissance délivrée d'une cellule photovoltaïque dépend non seulement de son exposition au soleil qui varie au cours de la journée, mais aussi par exemple de l'occultement du soleil, par exemple par l'ombre portée par des nuages ou d'autres phénomènes météorologiques.

De plus, quand ces cellules sont connectées à une charge comme un consommateur (par exemple un capteur ou encore une batterie à recharger, il s'avère que la puissance transférée à la charge ne correspond généralement pas à la puissance maximale qui pourrait être délivrée par la cellule. On remarque des problèmes similaires dans le cas du éolien. Il en résulte que le rendement chute non seulement à cause par exemple d'un ensoleillement plus faible, mais ce rendement est en plus grevé par un point de fonctionnement imposé se situant en dessous des performances potentielles de la cellule.

Afin de palier cet inconvénient et pour produire toujours de l'énergie le plus proche du point de fonctionnement optimal, des circuits mettant en oeuvre une méthode appelé Maximum Power Point Tracking (MPPT) (méthode de recherche de la puissance maximale) ont été développés depuis 1968. Il s'agit d'assurer une meilleure connexion entre une source non linéaire et une charge arbitraire.

Ces circuits sont conçus pour forcer le générateur, tel que la cellule photovoltaïque, à travailler à son point de fonctionnement maximum (« Maximum power point » pour point de puissance maximale en anglais) ce qui induit un rendement amélioré.

Un contrôleur MPPT permet donc de piloter le convertisseur statique reliant la charge (une batterie par exemple) et le panneau photovoltaïque de manière à fournir en permanence le maximum de puissance à la charge. Un tel contrôleur est divulgué par le document FR 2.686.434.

Il est connu de mettre en oeuvre pour la recherche du point maximal de puissance MPP (***MPP, Maximum Power Point*** en anglais) une méthode basée une méthode perturbation-observation.

Dans le cas d'une application photovoltaïque, il s'agit en fait d'un algorithme qui, pour une tension $U1$ fixée, va mesurer la puissance correspondante $P1$ délivrée par le générateur, puis, après un certain temps, l'algorithme impose une tension $U2 = U1 + \Delta U$ et mesure également la puissance correspondante P2. Par la suite, on impose une tension U3 = $U2 + \Delta U$, si P2 est supérieure à $P1$ ou U3 = $U2 - \Delta U$ dans le cas contraire.

Toutefois, cela implique des mesures de courant et aussi des moyens de calculs importants dont la consommation énergétique est non négligeable. C'est pourquoi dans une installation photovoltaïque de grande taille, un sous-groupe de cellules est exclusivement dédié à fournir l'énergie nécessaire pour le contrôle du circuit MPPT.

Cependant, dans des microsystèmes électroniques, comme par exemple des capteurs autonomes, cette approche n'est pas acceptable, car les contraintes en termes d'encombrement et de poids sont fortes, et il est nécessaire d'avoir un système le plus petit possible avec une autonomie accrue.

On connaît aussi des circuits de recherche du point de fonctionnement de puissance maximale possédant une cellule pilote supplémentaire, ce qui n'est pas toujours souhaitable.

Il est également connu des circuits MPPT sans cellule pilote qui se basent sur un échantillonnage de la tension en circuit ouvert en déconnectant à fréquence fixe le panneau photovoltaïque avec le reste du circuit pour mesurer la tension en circuit ouvert. Le système reconnecte alors le panneau au circuit de récupération qui a pris en compte les nouveaux paramètres optimisés. Mais il en résulte une interruption fréquente du processus de récupération d'énergie, ce qui n'est pas admissible pour des microsystèmes électroniques à vocation autonome.

La présente invention vise à palier ces inconvénients précités, au moins en partie.

Selon un aspect, on cherche à optimiser la récupération d'énergie tout en permettant une réduction sensible de l'encombrement du système, en particulier la taille du générateur par exemple photovoltaïque ou éolien, mais aussi de l'accumulateur de secours, par exemple une pile ou un supercondensateur.

A cet effet, la présente invention propose un circuit convertisseur destiné à être relié à une source d'énergie électrique susceptible de fluctuations importantes, comprenant :

- un circuit de hachage comprenant une borne d'entrée susceptible d'être reliée à ladite source d'énergie électrique,

- un premier circuit de sortie adapté à être connecté via un premier commutateur à une borne de sortie du circuit de hachage,
- un second circuit de sortie adapté à être connecté via un second commutateur à la borne de sortie du circuit de hachage,

- un circuit de commande adapté pour commander d'une part le rapport cyclique du circuit de hachage en fonction de la variation de tension de ladite source d'énergie électrique, et d'autre part la commutation des premier et second commutateurs en fonction d'une plage de consigne de tension de sortie pour le premier circuit de sortie.

Selon une ou plusieurs caractéristiques du circuit convertisseur, prises seules ou en combinaison :

- le premier circuit de sortie est destiné à être raccordé à une charge électrique fonctionnant dans la plage de consigne de tension, et le second circuit de sortie est destiné à être raccordé à un accumulateur d'énergie électrique,
- le circuit de commande comporte un comparateur à hystérésis dont une entrée est raccordée au premier circuit de sortie et dont l'autre entrée est raccordée à une référence, la sortie du comparateur étant raccordée à une entrée d'une unité de commande commandant un générateur de commande dont deux sorties sont respectivement reliées aux premier et second commutateurs pour leur pilotage respectif,
- l'accumulateur d'énergie électrique est une micro-pile rechargeable,
- l'accumulateur d'énergie électrique est un supercondensateur,
- les circuits de sortie comprennent des filtres passe - bas,
- le circuit de commande comprend en outre des moyens pour

    - déterminer la tension aux bornes de ladite source d'énergie électrique pour deux rapports cycliques différents d'une quantité prédéfinie,
    - calculer la différence entre les tensions obtenues pour deux rapports cycliques différents d'une quantité prédéfinie,
    - comparer cette différence de tension avec une valeur de différence de tension obtenue précédemment, et
    - commander un changement du rapport cyclique d'une quantité prédéfinie en fonction du résultat de comparaison,

- le circuit de commande est configuré pour commander une augmentation du rapport cyclique d'une quantité prédéfinie si une diminution précédente du rapport cyclique a eu pour résultat une diminution de la différence de tension par rapport à celle obtenue lors de la détermination précédente,
- le circuit de commande est configuré pour commander une diminution du rapport cyclique d'une quantité prédéfinie si une augmentation précédente du rapport cyclique a eu pour résultat une diminution de la différence de tension par rapport à celle obtenue lors de la détermination précédente,
- le circuit de hachage comprend une inductance d'accumulation d'énergie électrique et au moins un commutateur de hachage commandé par le circuit de commande,
- l'inductance d'accumulation d'énergie électrique et le commutateur de hachage sont disposés selon une configuration élévateur de tension,
- l'inductance d'accumulation d'énergie électrique et deux commutateurs de hachage sont disposés selon une configuration abaisseur de tension,
- l'inductance d'accumulation d'énergie électrique et trois commutateurs de hachage sont disposés selon une configuration abaisseur / élévateur de tension,
- le circuit de commande comporte un capteur de courant « zéro » de l'inductance d'accumulation d'énergie électrique pour déclencher la commande d'au moins un commutateur.

L'invention a également pour objet un système électronique comprenant au moins une source d'énergie électrique susceptible de fluctuations importantes et au moins un circuit convertisseur tel que définie ci-dessus relié à ladite au moins une source d'énergie.

Selon une ou plusieurs caractéristiques du système électronique, prises seules ou en combinaison,

- ladite source comprend au moins une cellule photovoltaïque,
- ladite source comprend au moins une éolienne,
- ladite source comprend au moins un élément thermoélectrique,
- la sortie de chaque source d'énergie est reliée à l'entrée d'un circuit convertisseur associé et chacun des seconds circuits de sortie des circuits convertisseurs comprend un supercondensateur.

D'autres avantages et caractéristiques apparaîtront à la lecture de la description de l'invention, ainsi que des figures suivantes sur lesquelles :

- la figure 1 présente un schéma d'un système électronique avec un circuit convertisseur selon un premier mode de réalisation,
- la figure 2 présente un organigramme permettant d'illustrer la méthode de recherche du maximum du point de puissance,
- la figure 3 présente un graphique schématique des commandes des transistors du circuit convertisseur selon l'invention en fonction du temps,
- la figure 4 présente un schéma d'un système électronique avec un circuit convertisseur selon un second mode de réalisation,
- la figure 5 présente un schéma d'un système électronique avec un circuit convertisseur selon un troisième mode de réalisation,
- la figure 6 présente un schéma d'un système électrique selon un autre mode de réalisation.

Sur toutes les figures, les éléments identiques portent les mêmes numéros de référence.

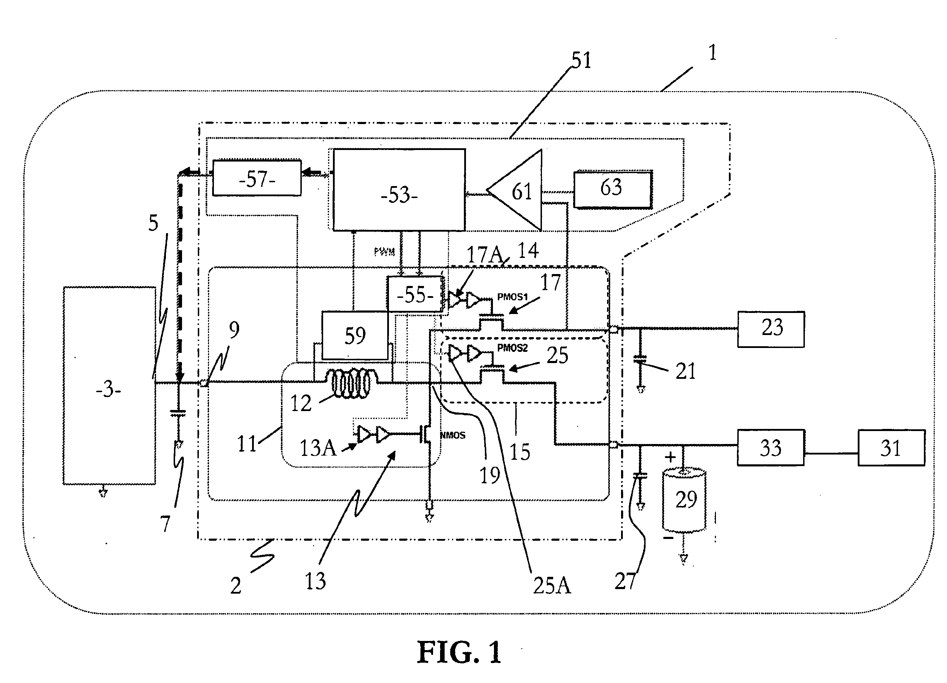

La figure 1 présente un exemple de réalisation d'un schéma d'un système électronique 1 comprenant un circuit convertisseur 2 et une source d'énergie électrique 3, reliée au circuit 2.

En ce qui concerne la source d'énergie électrique 3 susceptible de fluctuations importantes, il s'agit par exemple d'une cellule ou d'un panneau solaire, d'un élément thermoélectrique ou encore d'une éolienne, en particulier de petite taille.

Par fluctuations importantes, on entend des fluctuations d'environ d'un facteur cent entre la puissance la plus faible et la puissance la plus forte pouvant être délivrée par une telle source 3.

Une sortie 5 de cette source 3 est raccordée via un filtre passe-bas 7, réalisé par un condensateur, à une borne d'entrée 9 du circuit convertisseur 2.

Le circuit convertisseur 2 comprend un circuit de hachage 11 dont la borne d'entrée forme la borne d'entrée 9 du circuit convertisseur 2 reliée à ladite source d'énergie électrique 3.

Le circuit de hachage 11 comprend d'une part une inductance d'accumulation d'énergie électrique 12 et au moins un commutateur dé hachage 13.

Sur la figure 1, l'inductance d'accumulation d'énergie électrique 12 et le commutateur de hachage 13 sont disposés selon une configuration élévateur de tension (également appelé « configuration boost »), c'est-à-dire que l'entrée de l'inductance est reliée à la source 3 et la sortie de l'inductance 12 peut être reliée à la masse si le commutateur 13 est à l'état passant pour permettre l'établissement d'un champ magnétique autour de l'inductance 12. La fréquence de hachage est par exemple de 200kHz.

Le circuit convertisseur comprend de plus un premier 14 et un second 15 circuits de sortie.

En amont, le premier circuit de sortie 13 est connecté via un premier commutateur 17 à une borne de sortie 19 du circuit de hachage 11.

En aval, ce premier circuit de sortie 13 est raccordé via un filtre passe-bas 21 à une charge électrique 23 appartenant au système électronique 1 et fonctionnant dans une plage de consigne de tension prédéfinie.

En amont, le second circuit de sortie 15 est connecté via un second commutateur 25 à la borne de sortie 19 du circuit de hachage 11.

En aval, le second circuit de sortie 15 est raccordé via un filtre passe-bas 27 à un accumulateur d'énergie électrique 29 appartenant au système électronique 1.

Cet accumulateur 29 peut être un condensateur, un supercondensateur, une batterie, une micro-pile ou une mini-batterie.

Comme cela est montré sur la figure 1, afin de permettre une alimentation contrôlée d'une charge électrique 31 en aval de l'accumulateur électrique 29, on peut prévoir un régulateur de tension DC-DC 33.

Si l'accumulateur d'énergie électrique 29 est une batterie, une micro-pile ou une mini-batterie, il est prévu de prévoir un circuit chargeur entre le filtre passe-bas 27 et l'accumulateur 29 pour permettre la charge de la batterie suivant les conditions associées à la technologie de la batterie afin d'éviter un échauffement et/ou une dégradation prématurée.

Selon une première variante, la charge 31 et la charge 23 sont identiques. Dans ce cas, l'accumulateur d'énergie électrique 29 sert par exemple pour alimenter la charge 23 lorsque l'énergie produite par la source 3 n'est pas suffisante pour une alimentation directe de la charge 23. Dans le cas d'une cellule photovoltaïque comme source d'énergie électrique 3, ceci peut être le cas par exemple la nuit ou lorsque l'ensoleillement est trop faible, par exemple en cas de ciel nuageux.

Selon une seconde variante, les charges 23 et 31 sont différentes et correspondent à des consommateurs électriques différents.

Le pilotage du circuit convertisseur 2 est assuré par un circuit de commande 51.

Ce circuit de commande 51 présente une unité de commande 53 commandant d'une part le rapport cyclique

α du circuit de hachage 11 et d'autre part la commutation des premier 17 et second 25 commutateurs comme cela va être détaillé ci-après.

A cet effet, l'unité de commande 53 comprend une sortie PWM (pour « pulse width modulation », c'est-à-dire modulation de largeur d'impulsion pulse en anglais) commandant un générateur 55 de commande des commutateurs 13, 17 et 25 (également appelé unité DTLC pour « dead time logic control » à savoir commande logique de temps mort en anglais).

Concernant le commutateur 13, il est à noter qu'il s'agit d'un transistor du type NMOS dont la base est reliée via des buffers (également appelé des lignes de retard) 13A à la sortie du générateur 55.

Pour les commutateurs 17 et 25, il s'agit de transistors PMOS dont les bases sont reliées respectivement via des buffers 17A et 25A à des sorties associées du générateur 55.

Le circuit de commande 51 comprend de plus des moyens pour déterminer la tension aux bornes de ladite source d'énergie électrique à deux instants successifs. A cet effet, on utilise un convertisseur analogique - numérique 5 7 dont une entrée est raccordée à la borne 5 et dont une sortie est raccordée à une entrée correspondante de l'unité de commande 53.

Pour la commande en particulier du commutateur 17 et 25, le circuit de commande 51 comprend un capteur 59 de courant « zéro » pour déterminer l'annulation du courant à travers l'inductance d'accumulation 12, ce capteur 59 délivrant un signal à une entrée correspondante de l'unité de commande 53.

Selon une variante non représentée, on peut envisager de remplacer le capteur de courant « zéro » par une diode à très faible seuil de tension en parallèle avec un commutateur.

Pour la commande des commutateurs 17 et 25 dont l'état ouvert ou fermé détermine si la sortie 19 du circuit de hachage 11 est reliée directement à la charge 23 ou à l'accumulateur d'énergie électrique 29, le circuit de commande 51 comporte un comparateur à hystérésis 61 dont une entrée est raccordée au premier circuit de sortie 14 et dont l'autre entrée est raccordée à une référence 63, la sortie du comparateur 61 étant raccordée à une entrée de l'unité de commande 53.

Pour le fonctionnement, l'unité de commande 53 commande le générateur 55 de façon que

- quand le commutateur 13 est fermé (état passant), les commutateurs 17 et 2 5 sont ouverts (étant bloquant),
- quand l'un des commutateurs 17 ou 25 est fermé (état passant), l'autre 25 ou 17 est toujours ouvert (état bloquant) et le commutateur 13 est ouvert (état bloquant).

Ainsi, à un moment donné, seul un des commutateurs 13, 17 ou 25 peut être à l'état passant, les deux autres étant à l'état bloquant.

Par la suite, on va détailler le fonctionnement du circuit convertisseur 2 de la figure 1.

Afin de faire fonctionner la source 3 toujours autour du point maximal de puissance MPP, les inventeurs de la présente invention ont constaté que la dérivée de la tension de fonctionnement de la source 3 en fonction du rapport cyclique présente un maximum autour du point maximal de puissance MPP. Il en résulte que la recherche du maximum de cette dérivée de tension équivaut à la recherche du point maximal de puissance.

Ainsi, comme on va le voir, grâce à de simples de mesures de tensions et des opérations de soustractions et de comparaison qui sont très peu gourmandes en énergie et en puissance de calcul, on peut faire fonctionner le circuit convertisseur 2 autour de point maximal de puissance MPP, ce qui est très avantageux si peu de puissance est disponible.

A cet effet, l'unité de commande 53 commande le rapport cyclique α du circuit de hachage 11 en fonction de la variation de tension (la dérivée en fonction du rapport cyclique) de ladite source d'énergie électrique

- en déterminant la tension aux bornes de ladite source d'énergie électrique pour deux rapports cycliques différents d'une quantité prédéfinie,
- en calculant la différence entre les tensions obtenues pour deux rapports cycliques différents d'une quantité prédéfinie,
- en comparant cette différence de tension avec une valeur de différence de tension obtenue précédemment, et
- en commandant un changement du rapport cyclique d'une quantité prédéfinie en fonction du résultat de comparaison.

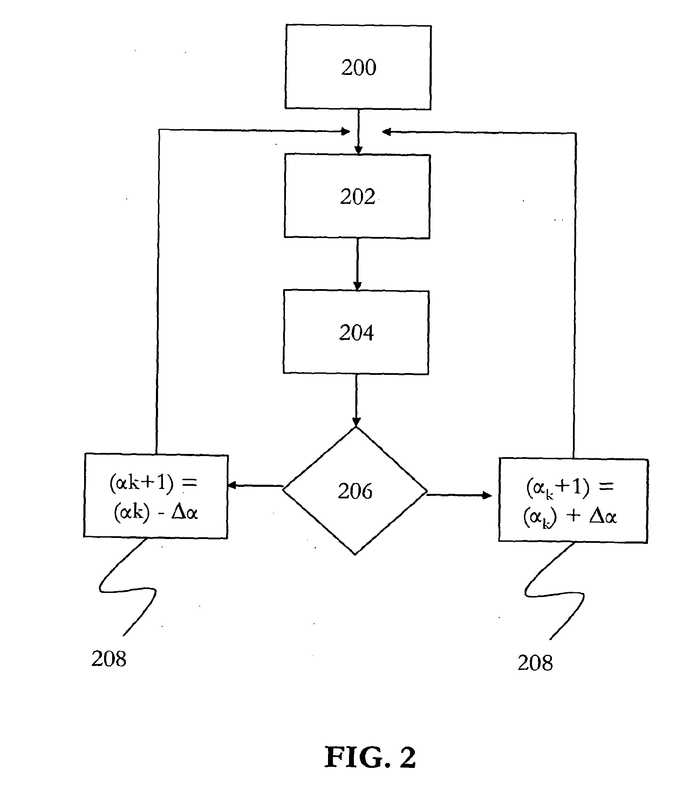

Ces différentes étapes sont détaillées à la figure 2.

Lors d'une étape d'initialisation 200, on règle la valeur du rapport cyclique α à une valeur prédéfinie, par exemple à α = 0,5 et on détermine la tension $V_s(\alpha)$ aux bornes de la source 3.

Puis, on fait varier le rapport cyclique d'une quantité prédéfinie Δα, et, on détermine à nouveau la tension $V_s(\alpha + \Delta\alpha)$ aux bornes de ladite source d'énergie électrique 3.

Ensuite, on calcule la valeur absolue de la différence entre ces deux tensions :

$$\Delta\ V^{ini}_{s} = |V_{s}\ (\alpha) - V_{s}\ (\alpha + \Delta\alpha)\ |$$

En variante, on peut aussi fixer $\Delta V^{ini}_{s}$ à une valeur prédéfinie.

Puis commence la boucle de réglage par récurrence proprement dite.

Lors d'une étape 202 pour une boucle k (k étant un nombre entier), on détermine la tension $V_{s}(\alpha_{k})$ aux bornes de la source 3.

Lors d'une étape 204, on calcule la valeur absolue de la différence entre les deux tensions mesures pour la boucle k et k-1 :

$$\Delta\ V_{s}(k) = |V_{s}\ (\alpha_{k}) - V_{s}\ (\alpha_{k-1})\ |\ ;\ où\ |\ (\alpha_{k}) - (\alpha_{k-1})\ |\ = \Delta\alpha$$

Ensuite, lors de l'étape 206, on compare cette différence de tension $\Delta V_{s}(k)$ avec une valeur de différence de tension obtenue précédemment $V_{s}(k-1)$.

En fonction du résultat de comparaison, l'unité de commande 53 commande le changement du rapport cyclique d'une quantité prédéfinie $\Delta\alpha$ lors de l'étape 208.

Ainsi, le circuit de commande 51 est configuré pour commander une augmentation du rapport cyclique la quantité prédéfinie $\Delta\alpha$ si une diminution précédente du rapport cyclique a eu pour résultat une diminution de la différence de tension par rapport à celle obtenue lors de la détermination précédente.

Autrement dit, si $(\alpha_{k}) = (\alpha_{k-1}) - \Delta\alpha$ et si $\Delta V_{s}(k) < \Delta V_{s}(k-1)$, alors $(\alpha_{k+1}) = (\alpha_{k}) + \Delta\alpha$.

Dans le cas contraire, le circuit de commande est 51 configuré pour commander une diminution du rapport cyclique d'une quantité prédéfinie $\Delta\alpha$ si une augmentation précédente du rapport cyclique a eu pour résultat une diminution de la différence de tension par rapport à celle obtenue lors de la détermination précédente,

Autrement dit, si $(\alpha_{k}) = (\alpha_{k-1}) + \Delta\alpha$ et si $\Delta V_{s}(k) < \Delta V_{s}(k-1)$, alors $(\alpha_{k+1}) = (\alpha_{k}) - \Delta\alpha$.

Après l'étape 208, on revient à l'étape 202.

Ainsi, le circuit convertisseur oscille autour du point de fonctionnement maximal MPP, ce qui garantit de récupérer un maximum de puissance disponible à la source.

La fréquence de recherche du point maximum de puissance MPP ou fréquence de rafraîchissement du rapport cyclique, c'est-à-dire la fréquence pour réaliser les étapes 202 à 208, est de l'ordre d'une dizaine de Hertz, par exemple de 16Hz.

On constate en outre que plus $\Delta\alpha$ est petit, plus le circuit peut fonctionner proche du point optimal maximum de puissance. Dans ce cas, on choisira une fréquence de rafraîchissement plus élevée pour permettre une adaptation plus rapide du rapport cyclique en cas de changement des conditions de fonctionnement.

Comme cela a été dit précédemment, lorsque le commutateur 13 est fermé, les commutateurs 17 et 25 sont ouverts et l'inductance est parcourue par un courant fourni par la source 3 établissant un champ magnétique.

Puis, le commutateur 13 est ouvert et l'énergie électrique peut être fourni soit directement à la charge 23 pour une consommation directe en ouvrant le commutateur 17, soit être stocké dans l'accumulateur 29 pour une consommation ultérieure.

Le circuit de sortie 14 fonctionne donc ensemble avec le circuit de hachage 11 comme un régulateur de tension.

Ainsi, lorsque le commutateur 13 est ouvert, le commutateur 17 s'ouvre si la tension de sortie est comprise dans une plage de consigne de tension de sortie.

Cette plage de consigne est définie par l'intermédiaire du comparateur à hystérésis 61 et la référence 63.

Lorsque la tension de sortie est en dehors de la plage de consigne, l'unité de commande 53 reçoit du comparateur 61 un signal correspondant et commande l'ouverture du commutateur 25 si le commutateur 13 est toujours ouvert.

Ainsi, l'énergie électrique générée par la source 3 peut être récupérée de façon optimale soit pour une consommation directe de la charge 23, soit pour charger l'accumulateur 29.

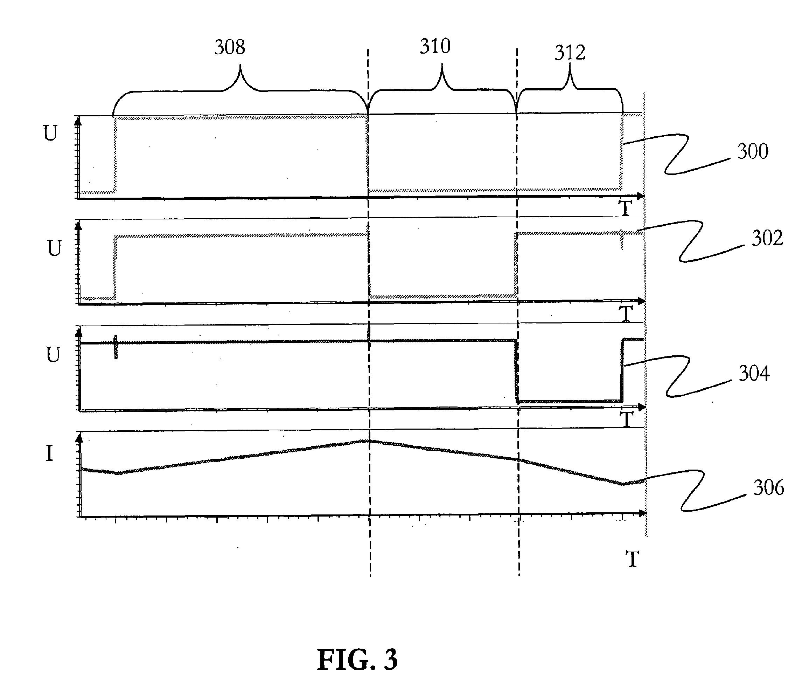

Ce fonctionnement est aussi illustré sur la figure 3.

Les courbes 300, 302 et 304 montrent respectivement les tensions commande U des commutateurs 13, 17 et 25 en fonction du temps. Il est rappelé que le commutateur 13 est un transistor du type NMOS tandis que les commutateurs 17 et 25 sont du type PMOS dans le présent exemple de réalisation.

La courbe 306 montre l'évolution du courant à la borne de sortie 19.

Ainsi, lors de l'intervalle de temps 308, la tension de commande des commutateurs 13, 17 et 25 est à un niveau haut, ce qui signifie que le transistor NMOS 13 est passant et l'inductance 12 se charge tandis que les transistors PMOS 17 et 25 sont à l'état bloquant.

Puis, lors de l'intervalle de temps 310, la tension de commande des commutateurs 13 et 17 est à un niveau bas, ce qui signifie que le transistor NMOS 13 est bloquant et l'inductance 12 se décharge par le circuit de sortie 14 (voir courbe 306) étant donné que le transistor PMOS 25 est alimenté par une tension de niveau haut et donc à l'état bloquant. La durée de cet intervalle de temps 310 dépend du fait si la tension de sortie est comprise dans la plage de consigne. Elle dépend donc de l'énergie produite par la source et du courant consommé par la charge 23.

Lorsque la tension de sortie se trouve en dehors de la plage de consigne de tension de sortie et que la tension de sortie du commutateur NMOS est toujours au niveau bas, donc à l'état bloqué, le commutateur 17 passe lors de l'intervalle de temps 312 à l'état bloquant tandis que le commutateur 25 passe à l'état passant et l'inductance se décharge maintenant vers le circuit de sortie 15 pour recharger l'accumulateur 29.

L'utilisation de l'énergie emmagasinée dans l'accumulateur 29, par exemple par la charge 31, se fait de façon traditionnelle, en cas de besoin, via le régulateur 33 et ne sera pas décrit plus en détail.

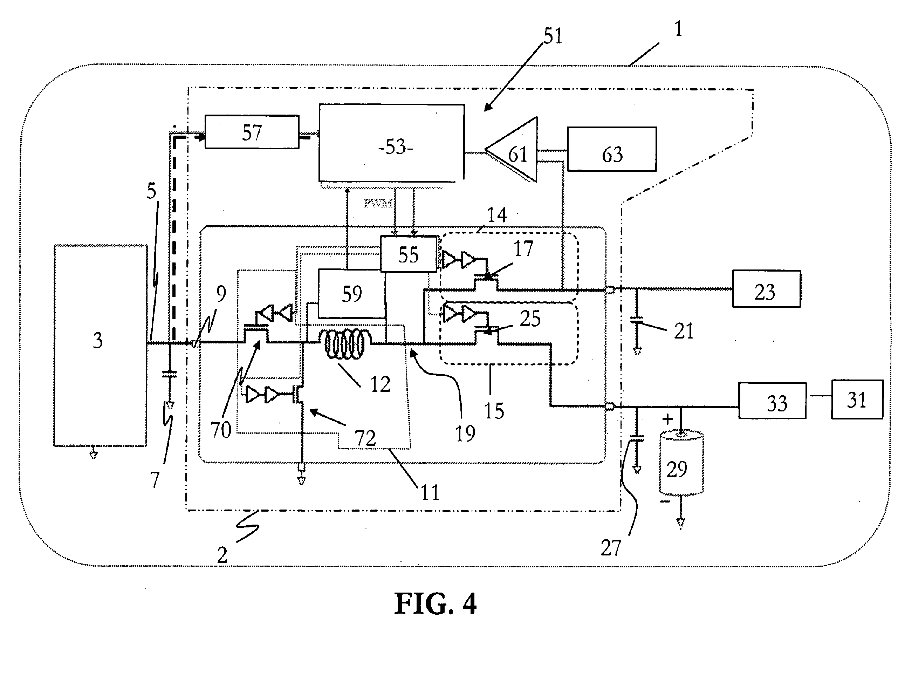

La figure 4 montre un schéma d'un circuit convertisseur selon un second mode de réalisation.

Ce schéma diffère de celui de la figure 1 par le fait que le commutateur 13 est supprimé et que l'inductance d'accumulation d'énergie électrique 12 et deux commutateurs de hachage 70 et 72 commandés par le circuit de commande du circuit de hachage sont disposés selon une configuration abaisseur de tension (également appelé configuration « buck »).

Plus en détail, le commutateur 70 est relié à la source 3 et l'entrée de l'inductance 12. Si le commutateur 70 est à l'état passant, il permet l'établissement d'un champ magnétique autour de l'inductance 12. La fréquence de hachage est par exemple de 200kHz.

Les commutateurs 70, 17 et 25 fonctionnent de façon similaire comme pour le circuit convertisseur de la figure 1 aussi bien pour la recherche du point maximal de puissance que pour la direction de l'énergie électrique vers les circuits de sortie 14 et 15.

Le commutateur 72 est utilisé en début de chaque période de hachage pour décharger l'inductance 12 complètement vers la masse.

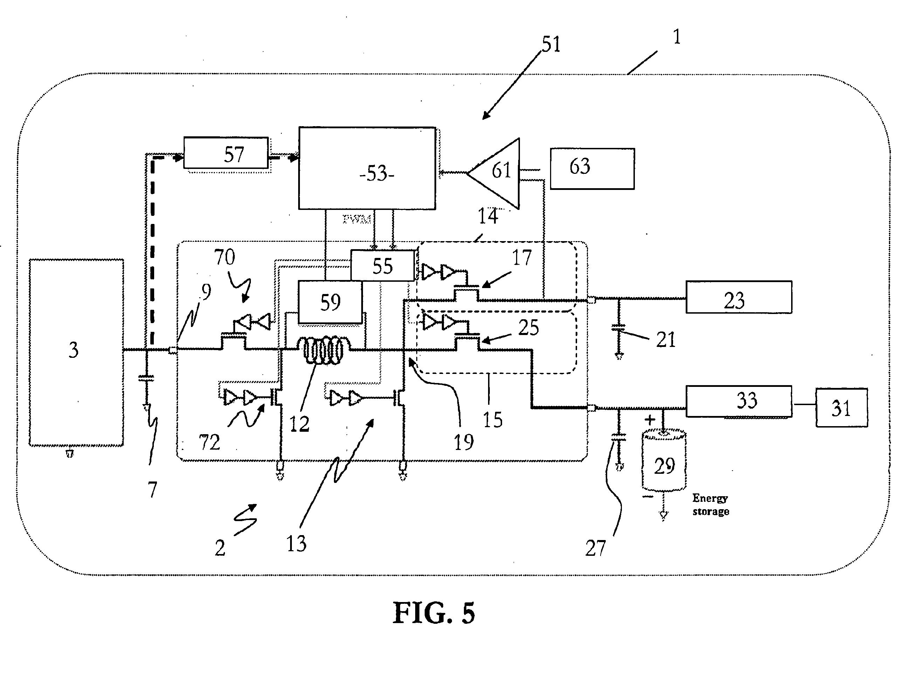

La figure 5 montre un schéma d'un circuit convertisseur selon un troisième mode de réalisation.

Ce schéma diffère de celui de la figure 1 par le fait que le commutateur 13 est conservé et que les deux commutateurs de hachage 70 et 72 de la figure 4 sont ajoutés.

L'inductance d'accumulation d'énergie électrique 12 et les trois commutateurs de hachage 13, 70 et 72 commandé par le circuit de commande le circuit de hachage sont disposés selon une configuration abaisseur / élévateur de tension (également appelé configuration « buck-boost »).

Pour un fonctionnement élévateur de tension, le commutateur 70 est toujours à l'état passant et le commutateur 72 à l'état bloquant, le circuit convertisseur 2 fonctionnant avec les commutateurs 13, 17 et 25 comme cela a été décrit en relation avec la figure 1.

Pour un fonctionnement abaisseur de tension, le commutateur 13 est toujours à l'état bloquant, le circuit convertisseur 2 fonctionnant avec les commutateurs 70, 72, 17 et 25 comme cela a été décrit en relation avec la figure 4.

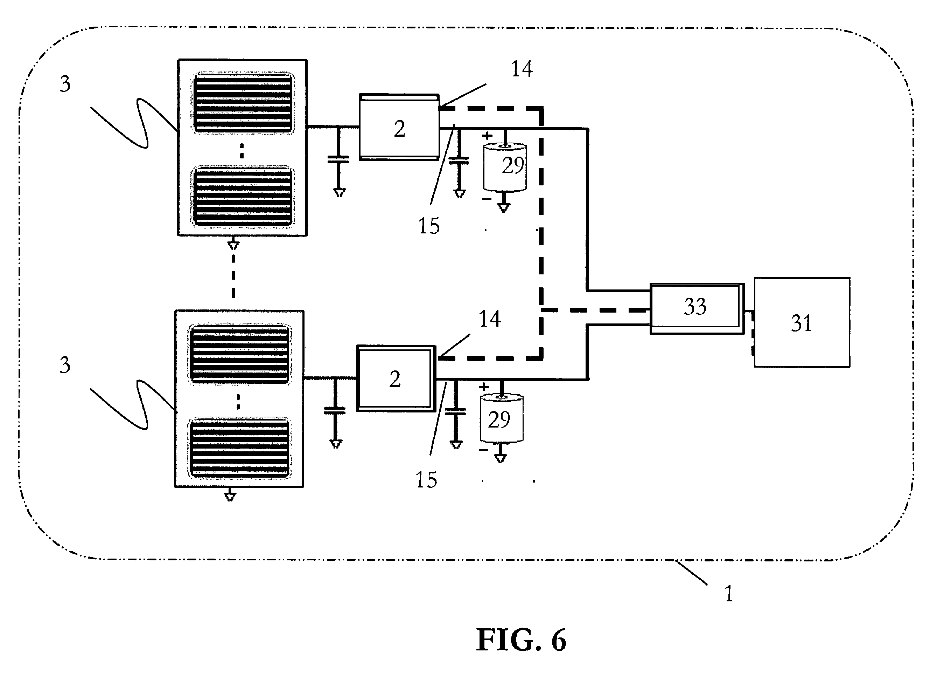

La figure 6 montre un schéma d'un système électrique comprenant plusieurs cellules photovoltaïques dont chacune est associée à un circuit convertisseur 2 comme celui par exemple de la figure 1.

Dans ce cas, les premier circuits de sorties 14 sont raccordées ensemble pour fournir une alimentation stabilisée locale et chacun des seconds circuits de sortie 15 des circuits convertisseurs 2 comprend un supercondensateur ainsi qu'un régulateur de tension DC-DC 33.

La récupération d'énergie est ainsi optimisée étant donné que les cellules sont rendues indépendantes entre-elles, ce qui prévient le fait qu'une cellule par exemple ombragée devient une charge pour les autres cellules et fait chuter le rendement de récupération énergétique.

De plus, un tel montage permet que chacune des cellules puisse fonctionner à son point maximal de puissance indépendamment des autres cellules photovoltaïques.

Enfin, lorsque le supercondensateur est assez chargé, il peut délivrer son énergie via le régulateur 33.

On comprend donc que le circuit convertisseur 2 selon l'invention permet une optimisation de la récupération d'énergie tout en fournissant une alimentation régulée. Le circuit se distingue aussi par sa simplicité de fonctionnement et son faible besoin en ressources énergétiques et de calcul.

En particulier pour des capteurs autonomes, il permet un dimensionnement plus petit des piles / batteries alimentant le capteur lorsque la source ne fournit pas ou pas assez d'énergie.

## Revendications

**1.** Circuit convertisseur (2) destiné à être relié à une source d'énergie électrique (3) susceptible de fluctuations importantes, comprenant :

- un circuit de hachage (11) comprenant une borne d'entrée (9) susceptible d'être reliée à ladite source d'énergie électrique (3),

- un premier circuit de sortie (14) adapté à être connecté via un premier commutateur (17) à une borne de sortie (19) du circuit de hachage (11),
- un second circuit de sortie (15) adapté à être connecté via un second commutateur (25) à la borne de sortie (19) du circuit de hachage (11),

**caractérisé en ce qu'**il comporte un circuit de commande (51) adapté pour commander d'une part le rapport cyclique ($\alpha$) du circuit de hachage (11) en fonction de la variation de tension de ladite source d'énergie électrique (3), et d'autre part la commutation des premier (17) et second commutateurs (25) en fonction d'une plage de consigne de tension de sortie pour le premier circuit de sortie (14).

2. Circuit convertisseur selon la revendication 1, dans lequel le premier circuit de sortie (14) est destiné à être raccordé à une charge électrique (23) fonctionnant dans la plage de consigne de tension et dans lequel le second circuit de sortie (15) est destiné à être raccordé à un accumulateur d'énergie électrique (29).

3. Circuit convertisseur selon la revendication 2, **caractérisé en ce que** lorsque la tension de sortie est à l'intérieur de la plage de consigne, l'énergie électrique générée par la source (3) est récupérée pour une consommation directe de la charge (23) et lorsque la tension de sortie est en dehors de la plage de consigne, l'énergie électrique générée par la source (3) est récupérée pour charger l'accumulateur (29).

4. Circuit convertisseur selon la revendication 2 ou 3, **caractérisé en ce que** le circuit de commande (51) comporte un comparateur à hystérésis (61) dont une entrée est raccordée au premier circuit de sortie (14) et dont l'autre entrée est raccordée à une référence (63), la sortie du comparateur (61) étant raccordée à une entrée d'une unité de commande (53) commandant un générateur de commande (55) dont deux sorties sont respectivement reliées aux premier (17) et second (25) commutateurs pour leur pilotage respectif.

5. Circuit convertisseur selon la revendication 2 ou 3, dans lequel l'accumulateur d'énergie électrique (29) est une micro-pile rechargeable ou un supercondensateur.

6. Circuit convertisseur selon l'une quelconque des revendications 2 à 4, dans lequel les circuits de sortie (14, 15) comprennent des filtres passe - bas (21, 27).

7. Circuit convertisseur selon l'une quelconque des revendications 1 à 5, dans lequel le circuit de commande (51) comprend des moyens pour déterminer la tension aux bornes de ladite source d'énergie électrique à deux instants successifs, et en ce que l'unité de commande (53) commande le rapport cyclique ($\alpha$) du circuit de hachage (11) en fonction de la dérivée de la tension aux bornes de ladite source d'énergie électrique en fonction du rapport cyclique de façon à rechercher le maximum de cette dérivée de tension ce qui équivaut à la recherche du point maximal de puissance.

8. Circuit convertisseur selon l'une quelconque des revendications 1 à 7, dans lequel le circuit de commande (51) comprend en outre des moyens pour

- déterminer la tension aux bornes de ladite source d'énergie électrique pour deux rapports cycliques différents d'une quantité prédéfinie,
- calculer la différence entre les tensions obtenues pour deux rapports cycliques différents d'une quantité prédéfinie,
- comparer cette différence de tension avec une valeur de différence de tension obtenue précédemment, et
- commander un changement du rapport cyclique ($\alpha$) d'une quantité prédéfinie ($\Delta\alpha$) en fonction du résultat de comparaison.

9. Circuit convertisseur selon la revendication 8, dans lequel le circuit de commande (51) est configuré pour commander une augmentation du rapport cyclique ($\alpha$) d'une quantité prédéfinie ($\Delta\alpha$) si une diminution précédente du rapport cyclique a eu pour résultat une diminution de la différence de tension par rapport à celle obtenue lors de la détermination précédente.

10. Circuit convertisseur selon la revendication 8, dans lequel le circuit de commande (51) est configuré pour commander une diminution du rapport cyclique ($\alpha$) d'une quantité prédéfinie ($\Delta\alpha$) si une augmentation précédente du rapport cyclique a eu pour résultat une diminution de la différence de tension par rapport à celle obtenue lors de la détermination précédente.

**11.** Circuit convertisseur selon l'une quelconque des revendications précédentes, dans lequel le circuit de hachage (11) comprend une inductance d'accumulation d'énergie électrique (12) et au moins un commutateur de hachage (13 ; 70) commandé par le circuit de commande (51).

**12.** Circuit convertisseur selon la revendication 11, dans lequel l'inductance d'accumulation d'énergie électrique (12) et le commutateur de hachage (13) sont disposés selon une configuration élévateur de tension.

**13.** Circuit convertisseur selon la revendication 11, dans lequel l'inductance d'accumulation d'énergie électrique (12) et deux commutateurs de hachage (70, 72) sont disposés selon une configuration abaisseur de tension.

**14.** Circuit convertisseur selon la revendication 11, dans lequel l'inductance d'accumulation d'énergie électrique (12) et trois commutateurs de hachage (13, 70, 72) sont disposés selon une configuration abaisseur / élévateur de tension.

**15.** Circuit convertisseur selon l'une quelconque des revendications 11 à 14, dans lequel le circuit de commande comporte un capteur de courant « zéro » (59) de l'inductance d'accumulation d'énergie électrique pour déclencher la commande d'au moins un commutateur (17, 25).

**16.** Système électronique (1) comprenant au moins une source d'énergie électrique (3) susceptible de fluctuations importantes et au moins un circuit convertisseur (2) selon l'une quelconque des revendications 1 à 15 relié à ladite au moins une source d'énergie (3).

**17.** Système électronique selon la revendication 16 dans lequel la sortie de chaque source d'énergie (3) est reliée à l'entrée d'un circuit convertisseur (2) associé et dans lequel chacun des seconds circuits de sortie (15) des circuits convertisseurs (2) comprend un supercondensateur (29).

**Patentansprüche**

**1.** Konverterschaltung (2), die dazu bestimmt ist, mit einer Stromquelle (3) verbunden zu werden, die starke Schwankungen aufweisen kann, umfassend:

   - eine Hash-Codierschaltung (11), umfassend eine Eingangsklemme (9), die mit der Stromquelle (3) verbunden werden kann,
   - eine erste Ausgangsschaltung (14), die dazu vorgesehen ist, über einen ersten Umschalter (17) an eine Ausgangsklemme (19) der Hash-Codierschaltung (11) angeschlossen zu werden,
   - eine zweite Ausgangsschaltung (15), die dazu vorgesehen ist, über einen zweiten Umschalter (25) an die Ausgangsklemme (19) der Hash-Codierschaltung (11) angeschlossen zu werden,
   **dadurch gekennzeichnet, dass** sie eine Steuerschaltung (51) umfasst, die dazu vorgesehen ist, einerseits das zyklische Verhältnis ($\alpha$) der Hash-Codierschaltung (11) in Abhängigkeit von der Spannungsvariation der Stromquelle (3) und andererseits die Umschaltung der ersten (17) und zweiten Umschalter (25) in Abhängigkeit von einem Sollwertbereich der Ausgangsspannung für die erste Ausgangsschaltung (14) zu steuern.

**2.** Konverterschaltung nach Anspruch 1, bei der die erste Ausgangsschaltung (14) dazu bestimmt ist, an eine elektrische Last (23) angeschlossen zu werden, die in dem Spannungssollwertbereich funktioniert, und bei der die zweite Ausgangsschaltung (15) dazu bestimmt ist, an einen Stromspeicher (29) angeschlossen zu werden.

**3.** Konverterschaltung nach Anspruch 2, **dadurch gekennzeichnet, dass**, wenn die Ausgangsspannung im Sollwertbereich liegt, der von der Quelle (3) erzeugte Strom für einen direkten Verbrauch der Last (23) wiedergewonnen wird, und wenn die Ausgangsspannung außerhalb des Sollwertbereichs liegt, der von der Quelle (3) erzeugte Strom zum Laden des Stromspeichers (29) wiedergewonnen wird.

**4.** Konverterschaltung nach Anspruch 2 oder 3, **dadurch gekennzeichnet, dass** die Steuerschaltung (51) einen Hysterese-Komparator (61) umfasst, bei dem ein Eingang an die erste Ausgangsschaltung (14) und der andere Eingang an eine Referenzschaltung (63) angeschlossen ist, wobei der Ausgang des Komparators (61) an einen Eingang einer Steuereinheit (53) angeschlossen ist, die einen Steuergenerator (55) steuert, dessen beiden Ausgänge mit dem ersten (17) bzw. zweiten Umschalter (25) zu ihrer jeweiligen Steuerung verbunden sind.

**5.** Konverterschaltung nach Anspruch 2 oder 3, bei der der Stromspeicher (29) eine nachladbare Mikrobatterie oder ein Superkondensator ist.

6. Konverterschaltung nach einem der Ansprüche 2 bis 4, bei der die Ausgangsschaltungen (14, 15) Tiefpassfilter (21, 27) umfassen.

7. Konverterschaltung nach einem der Ansprüche 1 bis 5, bei der die Steuerschaltung (51) Mittel umfasst, um die Spannung an den Klemmen der Stromquelle zu zwei aufeinanderfolgenden Zeitpunkten zu bestimmen, und bei der die Steuereinheit (53) das zyklische Verhältnis ($\alpha$) der Hash-Codierschaltung (11) in Abhängigkeit von der Ableitung der Spannung an den Klemmen der Stromquelle in Abhängigkeit vom zyklischen Verhältnis steuert, um das Maximum dieser Spannungsableitung zu suchen, was der Suche nach dem maximalen Leistungspunkt gleichkommt.

8. Konverterschaltung nach einem der Ansprüche 1 bis 7, bei der die Steuerschaltung (51) ferner Mittel umfasst, um

- die Spannung an den Klemmen der Stromquelle für zwei unterschiedliche zyklische Verhältnisse einer vordefinierten Menge zu bestimmen,
- die Differenz zwischen den Spannungen zu berechnen, die für zwei unterschiedliche zyklische Verhältnisse einer vordefinierten Menge erhalten wurden,
- diese Spannungsdifferenz mit einem Spannungsdifferenzwert zu vergleichen, der vorher erhalten wurde, und
- eine Änderung des zyklischen Verhältnisses ($\alpha$) einer vordefinierten Menge ($\Delta\alpha$) in Abhängigkeit vom Vergleichsergebnis zu steuern.

9. Konverterschaltung nach Anspruch 8, bei der die Steuerschaltung (51) derart ausgeführt ist, dass sie eine Erhöhung des zyklischen Verhältnisses ($\alpha$) einer vordefinierten Menge ($\Delta\alpha$) steuert, wenn eine vorhergehende Verringerung des zyklischen Verhältnisses als Ergebnis eine Verringerung der Spannungsdifferenz im Vergleich mit jener, die bei der vorhergehenden Bestimmung erhalten wurde, gebracht hat.

10. Konverterschaltung nach Anspruch 8, bei der die Steuerschaltung (51) derart ausgeführt ist, dass sie eine Verringerung des zyklischen Verhältnisses ($\alpha$) einer vordefinierten Menge ($\Delta\alpha$) steuert, wenn eine vorhergehende Erhöhung des zyklischen Verhältnisses als Ergebnis eine Verringerung der Spannungsdifferenz im Vergleich mit jener, die bei der vorhergehenden Bestimmung erhalten wurde, gebracht hat.

11. Konverterschaltung nach einem der vorhergehenden Ansprüche, bei der die Hash-Codierschaltung (11) eine Stromspeicherinduktanz (12) und mindestens einen Hash-Codierumschalter (13; 70), der von der Steuerschaltung (51) gesteuert wird, umfasst.

12. Konverterschaltung nach Anspruch 11, bei der die Stromspeicherinduktanz (12) und der Hash-Codierumschalter (13) in einer Ausführung zur Spannungserhöhung angeordnet sind.

13. Konverterschaltung nach Anspruch 11, bei der die Stromspeicherinduktanz (12) und zwei Hash-Codierumschalter (70, 72) in einer Ausführung zur Spannungsverminderung angeordnet sind.

14. Konverterschaltung nach Anspruch 11, bei der die Stromspeicherinduktanz (12) und drei Hash-Codierumschalter (13, 70, 72) in einer Ausführung zur Spannungsverminderung/-erhöhung angeordnet sind.

15. Konverterschaltung nach einem der Ansprüche 11 bis 14, bei der die Steuerschaltung einen Stromfühler "Null" (59) der Stromspeicherinduktanz umfasst, um die Steuerung mindestens eines Umschalters (17, 25) auszulösen.

16. Elektronisches System (1), umfassend mindestens eine Stromquelle (3), die starke Schwankungen aufweisen kann, und mindestens eine Konverterschaltung (2) nach einem der Ansprüche 1 bis 15, die mit der mindestens einen Stromquelle (3) verbunden ist.

17. Elektronisches System nach Anspruch 16, bei dem der Ausgang jeder Stromquelle (3) mit dem Eingang einer zugehörigen Konverterschaltung (2) verbunden ist, und bei dem jede der zweiten Ausgangsschaltungen (15) der Konverterschaltungen (2) einen Superkondensator (29) umfasst.

**Claims**

1. Converter circuit (2) intended to be linked to an electrical energy source (3) capable of significant fluctuations, comprising:

   - a chopping circuit (11) comprising an input terminal (9) capable of being linked to the said electrical energy source (3),
   - a first output circuit (14) suitable for being connected via a first switch (17) to an output terminal (19) of the chopping circuit (11),
   - a second output circuit (15) suitable for being connected via a second switch (25) to the output terminal (19) of the chopping circuit (11),
   **characterized in that** it comprises a control circuit (51) suitable for controlling on the one hand the duty cycle ($\alpha$) of the chopping circuit (11) as a function of the voltage variation of the said electrical energy source (3), and on the other hand the switching of the first (17) and second switches (25) as a function of an output voltage setpoint range for the first output circuit (14).

2. Converter circuit according to Claim 1, in which the first output circuit (14) is intended to be coupled up to an electrical load (23) operating in the voltage setpoint range and in which the second output circuit (15) is intended to be coupled up to an electrical energy accumulator (29).

3. Converter circuit according to Claim 2, **characterized in that** when the output voltage is inside the setpoint range, the electrical energy generated by the source (3) is recovered for direct consumption of the load (23), and when the output voltage is outside the setpoint range, the electrical energy generated by the source (3) is recovered so as to charge the accumulator (29).

4. Converter circuit according to Claim 2 or 3, **characterized in that** the control circuit (51) comprises a hysteresis-type comparator (61) one input of which is coupled up to the first output circuit (14) and the other input of which is coupled up to a reference (63), the output of the comparator (61) being coupled up to an input of a control unit (53) controlling a control generator (55), two of whose outputs are respectively linked to the first (17) and second (25) switches for their respective command.

5. Converter circuit according to Claim 2 or 3, in which the electrical energy accumulator (29) is a rechargeable micro-cell or a supercapacitor.

6. Converter circuit according to any one of Claims 2 to 4, in which the output circuits (14, 15) comprise low-pass filters (21, 27).

7. Converter circuit according to any one of Claims 1 to 5, in which the control circuit (51) comprises means for determining the voltage across the terminals of the said electrical energy source at two successive instants, and in that the control unit (53) controls the duty cycle ($\alpha$) of the chopping circuit (11) as a function of the derivative of the voltage across the terminals of the said electrical energy source as a function of the duty cycle in such a way as to search for the maximum of this voltage derivative, this being equivalent to searching for the maximum power point.

8. Converter circuit according to any one of Claims 1 to 7, in which the control circuit (51) furthermore comprises means for

   - determining the voltage across the terminals of the said electrical energy source for two different duty cycles of a predefined quantity,
   - calculating the difference between the voltages obtained for two different duty cycles of a predefined quantity,
   - comparing this voltage difference with a voltage difference value obtained previously, and
   - controlling a change of the duty cycle ($\alpha$) by a predefined quantity ($\Delta\alpha$) as a function of the comparison result.

9. Converter circuit according to Claim 8, in which the control circuit (51) is configured to control an increase in the duty cycle ($\alpha$) by a predefined quantity ($\Delta\alpha$) if a previous decrease in the duty cycle resulted in a decrease in the voltage difference with respect to that obtained during the previous determination.

10. Converter circuit according to Claim 8, in which the control circuit (51) is configured to control a decrease in the duty cycle ($\alpha$) by a predefined quantity ($\Delta\alpha$) if a previous increase in the duty cycle resulted in a decrease in the voltage difference with respect to that obtained during the previous determination.

11. Converter circuit according to any one of the preceding claims, in which the chopping circuit (11) comprises an electrical energy accumulation inductor (12) and at least one chopping switch (13; 70) controlled by the control circuit (51).

12. Converter circuit according to Claim 11, in which the electrical energy accumulation inductor (12) and the chopping switch (13) are disposed according to a voltage stepup configuration.

13. Converter circuit according to Claim 11, in which the electrical energy accumulation inductor (12) and two chopping switches (70, 72) are disposed according to a voltage stepdown configuration.

14. Converter circuit according to Claim 11, in which the electrical energy accumulation inductor (12) and three chopping switches (13, 70, 72) are disposed according to a voltage stepdown / stepup configuration.

15. Converter circuit according to any one of Claims 11 to 14, in which the control circuit comprises a sensor of "zero" current (59) of the electrical energy accumulation inductor so as to trigger the control of at least one switch (17, 25).

16. Electronic system (1) comprising at least one electrical energy source (3) capable of significant fluctuations and at least one converter circuit (2) according to any one of Claims 1 to 15 linked to the said at least one energy source (3).

17. Electronic system according to Claim 16, in which the output of each energy source (3) is linked to the input of an associated converter circuit (2) and in which each of the second output circuits (15) of the converter circuits (2) comprises a supercapacitor (29)

FIG. 1

**FIG. 2**

**FIG. 3**

**FIG. 4**

EP 2 430 738 B1

**FIG. 5**

EP 2 430 738 B1

**FIG. 6**

EP 2 430 738 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2686434